Europäisches Patentamt

European Patent Office

Office européen des brevets

(11) Numéro de publication: **0 157 141**
**A1**

# (12) DEMANDE DE BREVET EUROPEEN

(21) Numéro de dépôt: **85101761.6**

(22) Date de dépôt: **18.02.85**

(51) Int. Cl.⁴: **H 04 N 5/335**, G 01 B 11/02

(30) Priorité: **23.02.84 FR 8402927**

(43) Date de publication de la demande: **09.10.85**
**Bulletin 85/41**

(84) Etats contractants désignés: **AT BE CH DE GB IT LI LU NL SE**

(71) Demandeur: **PROGE - Groupement d'Intérêt Economique régi par l'Ordonnance du 27 septembre 1967, 3-5 Villa Ségur, F-75007 Paris (FR)**

(72) Inventeur: **Denimal, Philippe, Les Martres d'Artières, F-63430 Pont du Chateau (FR)**

(74) Mandataire: **Renaudie, Jacques, FROGE 3-5 Villa Ségur, F-75007 Paris (FR)**

(54) **Dispositif de relevé de profil rapide.**

(57) Le dispositif selon l'invention comporte un réseau de points-image ($\beta$) photosensibles. Il est adapté à une lecture en parallèle de toutes les lignes ($\gamma$) de points-image ($\beta$) et intègre des moyens de traitement (comparateurs à seuil (3) et cellules de mémorisation (4)) des signaux électriques délivrés pour en extraire le profil observé.

EP 0 157 141 A1

ACTORUM AG

La présente invention se rapporte au domaine des mesures utilisant des moyens optiques. Elle concerne plus particulièrement les dispositifs adaptés au relevé de profils utilisant une image de type vidéo comme information captée, ainsi que l'exploitation de cette image.

Dans de telles installations de mesure, il est de plus en plus fréquent d'utiliser une caméra vidéo comme capteur. Le rôle de la caméra est de transformer une image optique caractérisée par une variation spatiale de brillance en un signal électrique caractérisé par une variation temporelle correspondante de courant. La plupart des caméras vidéo proposées à ce jour adoptent des formats d'image normalisés, soit 625 lignes et 40 msec par image en Europe, et 525 lignes et 33 msec par image aux USA et au Japon.

Malheureusement, l'utilisation des caméras vidéo pour la mesure pose un certain nombre de problèmes liés aux défauts géométriques de l'image obtenue et au temps d'acquisition de cette image relativement long.

L'utilisation comme cible photosensible de capteurs "à l'état solide" à la place de capteurs constitués d'un "tube à vide" a déjà permis d'éliminer les distorsions géométriques dues au balayage de la caméra ainsi que la rémanence. La partie photosensible de ces capteurs à l'état solide est formée de points-image élémentaires (appelés "pixels" dans la terminologie anglo-saxonne) réalisés sur un même substrat semiconducteur. L'état de la technique connaît différents modes de réalisation de la zone photosensible d'une part ainsi que différents systèmes de lecture des charges créant l'image d'autre part.

Pour améliorer les performances en rapidité de lecture, il est connu de s'affranchir des formats d'image

...

usuels. On bute alors sur une limite technologique, à savoir la fréquence maximale de lecture d'un réseau de pixels, de l'ordre de $10^7$ Hz. A titre d'exemple, en utilisant une matrice de 200 lignes de 250 pixels, le temps de lecture minimal sera de l'ordre de 5 msec. Cela ne permet donc de gagner qu'un peu moins d'un ordre de grandeur en vitesse de lecture (5msec au lieu de 40 msec). Dans la suite de l'exposé, nous reprendrons cette matrice de 200 × 250 pixels comme exemple car le nombre de pixels délimite soit le champ observé soit la résolution du senseur optique, données imposées par l'application concrète que l'on fait du senseur et maintenues constantes pour faciliter les comparaisons.

Pour beaucoup d'applications industrielles, ce temps de 5 msec pour l'acquisition d'une image est démesurément long et empêche en pratique la mesure par observation fixe d'objets en mouvement (flou cinétique).

On peut gagner en vitesse en utilisant non plus une matrice de pixels mais seulement une ligne. Les applications sont limitées aux cas où une image linéaire suffit. Cela ne permet pas le relevé d'images à deux dimensions, donc de profils.

Pour augmenter la vitesse d'acquisition des images formées sur des capteurs à l'état solide, il est également connu de lire plusieurs lignes de pixels en parallèle au lieu de balayer ligne par ligne selon la technique la plus répandue (brevet US 4 322 752).

Reprenons l'exemple d'une matrice constituée par 200 lignes de 250 pixels. En adoptant une fréquence de l'ordre de $10^7$ Hz, considérée comme maximale pour la lecture de pixels, on peut lire une ligne en 25 µsec. Or dans ce cas, toutes les lignes sont lues en parallèle. Sans tenir compte des temps de suppression, on peut donc théoriquement acquérir une telle image toutes les 25 µsec, soit 40 000 images par seconde. Considérant que chaque pixel représente une quantité d'information minimale de 6 bits, ce qui représente une gamme dynamique maximale de 64 : 1, le système devrait travailler à 200 × 250 (pixels par image) × 40 000 (images par seconde) × 6 (bits par pixel) = 12 000 Megabits par seconde. On bute

...

donc sur une autre impossibilité d'ordre technologique
puisqu'une telle densité d'information est clairement inexploitable.  Aussi doit-on lire successivement plusieurs
groupements de lignes lues simultanément, par exemple 20
groupes de 10 lignes, ce qui, toutes autres choses égales
par ailleurs, diminue la quantité d'information à transmettre
par unité de temps mais augmente d'autant le temps de lecture,
qui est multiplié par 20 (2 000 images par seconde ou
500 μsec par image).

Le but de l'invention est de fournir un dispositif
adapté au relevé d'un profil.

Un autre but de l'invention est de fournir un tel
dispositif qui permet la mesure d'un profil par une observation fixe d'objets en mouvement.

Selon un autre but de l'invention, le dispositif
de relevé de profil doit avoir une rapidité telle que,
pendant le temps de lecture d'une image, l'objet observé
s'est déplacé suffisamment peu pour que la précision de la
mesure ne soit pas altérée.

L'invention a également pour objet une caméra vidéo
utilisant un tel dispositif de relevé de profil.

L'invention repose sur le fait que, lorsque l'on
désire relever un profil, la plupart des informations
contenues dans une image vidéo sont surabondantes. En
pratique, chaque ligne contient une seule information utile,
à savoir la position du profil dans la ligne. On reconnaît
cette position en identifiant un intervalle de pixels en
surbrillance, ou en général un changement de brillance. Les
différentes manières d'éclairer un objet dont on cherche à
mesurer le profil sont bien connues de l'homme du métier et
ne sont pas décrites.

Le dispositif de relevé de profil selon l'invention,
comportant une pluralité de points-image photosensibles
élémentaires, réalisés sur un même substrat semi-conducteur
en une matrice à M lignes et P colonnes, comportant également,
associés à chacune des M lignes, des moyens appropriés de
lecture et de transfert des charges électriques accumulées
par lesdits points-image pour fournir un signal électrique
qui est une fonction desdites charges, lesdits moyens étant

...

organisés en vue d'une lecture en parallèle desdites M lignes, est remarquable en ce qu'il intègre des moyens de traitement dudit signal délivré simultanément par chacune des M lignes pour en extraire la seule information "position du profil" ainsi que des moyens de lecture desdites M informations.

L'invention sera mieux comprise en consultant les figures qui représentent de manière non limitative et schématiquement le fonctionnement du dispositif d'acquisition et de traitement intégré de l'image selon l'invention.

La figure 1 est un schéma synoptique du dispositif selon l'invention.

La figure 2 est un chronogramme représentant les principaux signaux électriques au cours du repérage de la position du profil dans une ligne.

La figure 3 est un schéma synoptique d'une variante de réalisation de l'invention.

La figure 4 est un schéma synoptique d'une troisième variante de réalisation de l'invention.

La figure 5 est un schéma synoptique d'une quatrième variante de réalisation de l'invention.

Dans toutes les figures et dans la description qui s'y rapporte, le système de notation suivant est adopté:

- i représente l'adresse d'un pixel dans une ligne et varie depuis 1 jusqu'à P ;

- j représente l'adresse d'une ligne de pixels dans la matrice et varie depuis 1 jusqu'à M ;

- p est utilisé pour une valeur particulière de l'adresse i.

Il y a bien sûr une correspondance bijective entre la position spatiale d'un pixel (d'une ligne) et son adresse i (j).

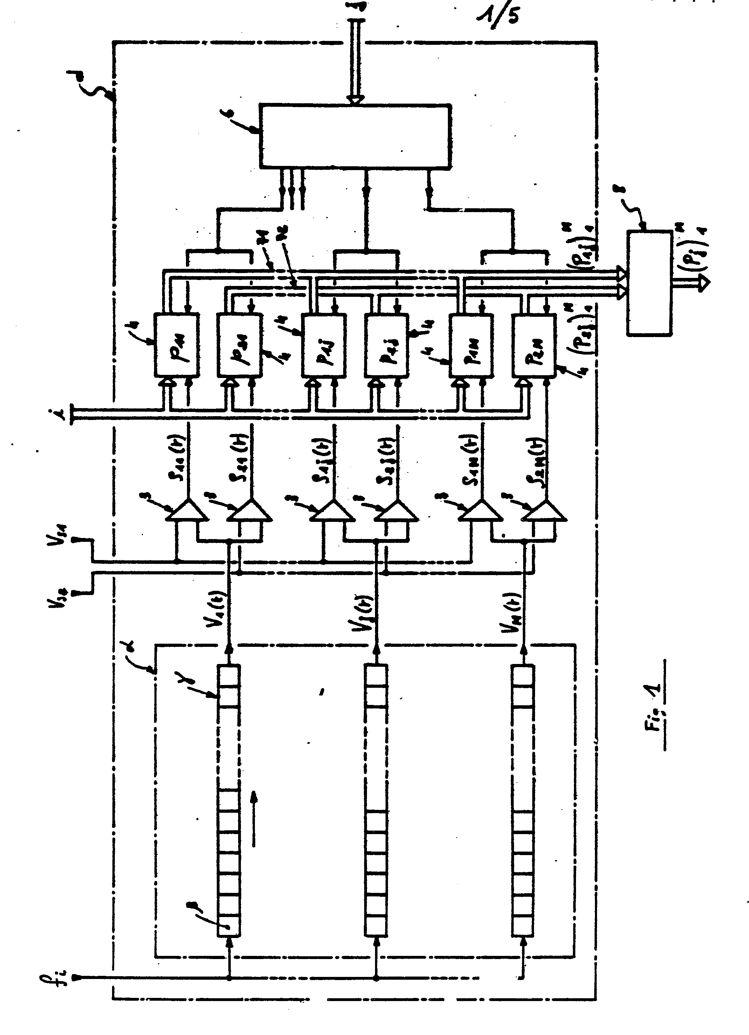

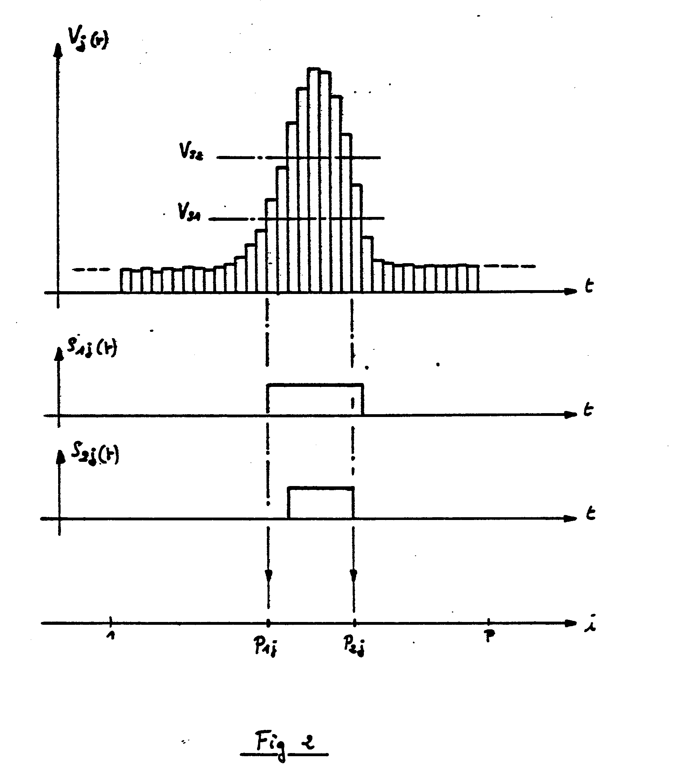

La figure 1 représente le dispositif (d) de relevé de profil selon l'invention, comportant une matrice (α) de points-image (β) ou pixels disposés en M lignes (γ) de p éléments. Le dispositif décrit est adapté au relevé d'un profil apparaissant en surbrillance. L'information brillance est transformée en quantité de charge électrique proportionnelle par les pixels (β). Chaque ligne de pixels est lue séquentiellement par

...

un moyen de lecture connu. Par exemple, un registre à décalage du type CCD (pour "Charge Coupled Device") reçoit en parallèle le contenu d'une ligne et délivre en série le signal électrique $V_j(t)$ qui est le résultat de la conversion de variation spatiale de brillance en variation temporelle de courant. La vitesse de lecture de ligne est pilotée par une horloge de fréquence $(f_i)$. Toutes les lignes $(\beta)$ sont lues simultanément et délivrent M signaux $V_j(t)$. Chaque signal $V_j(t)$ est comparé à une tension de seuil des fronts montants $V_{S1}$ et à une tension de seuil des fronts descendants $V_{S2}$ dans deux comparateurs à seuil (3). Les signaux $S_{1j}(t)$ et $S_{2j}(t)$ de dépassement respectivement du seuil $V_{S1}$ et $V_{S2}$ attaquent des cellules de mémorisation de la position des fronts montants et des fronts descendants de signal de brillance $V_j(t)$. Dans la suite, la référence (4) désigne en général les cellules mémorisation, quelles que soient leurs constitutions et leurs positions. Dans cette variante de réalisation, la mémorisation est effectuée sous forme digitale :
le "bus" (5) (terme anglo-saxon usuel pour désigner un canal de transfert en système digital) communique constamment l'adresse i du pixel lu aux cellules de mémorisation (4) qui enregistrent, pour chaque ligne et aux moments déterminés par les comparateurs (3), les adresses particulières (ou positions spatiales) des fronts montants $- p_{1j} -$ et descendants $- p_{2j} -$. Après l'acquisition et le traitement immédiat du signal $V_j(t)$ simultanément pour les M lignes, on dispose en mémoire de 2 M adresses correspondant à des coordonnées spatiales. Le registre d'adressage (6) sélectionne successivement les cellules de mémorisation (4) au moyen de l'adresse de ligne j. Les signaux de sortie délivrés simultanément par les bus de sortie (71) et (72) sont constitués chacun par la suite des adresses (ou des coordonnées) des fronts respectivement montants $(p_{1j})_1^M$ et descendants $(p_{2j})_1^M$. Disposant de ces données, une unité arithmétique et logique (8) calcule les coordonnées du profil $(p_j)_1^M$. De plus,

...

l'unité arithmétique et logique (8) peut effectuer d'autres opérations de contrôle (corrélation, cohérence des données) qui permettent de valider l'information profil restituée.

Le dispositif décrit est conçu pour relever un profil en surbrillance. Plus généralement, un premier comparateur repère un premier seuil du signal $V_j(t)$ pour enregistrer la position spatiale de ce premier seuil, et un second comparateur repère un second seuil dudit signal pour enregister la position spatiale de ce second seuil uniquement lorsque ledit premier seuil a déjà été repéré. L'amplitude de la tension de seuil n'a pas de signification pour déterminer l'ordre desdits seuils du signal $V_j(t)$, cet ordre étant imposé au dispositif.

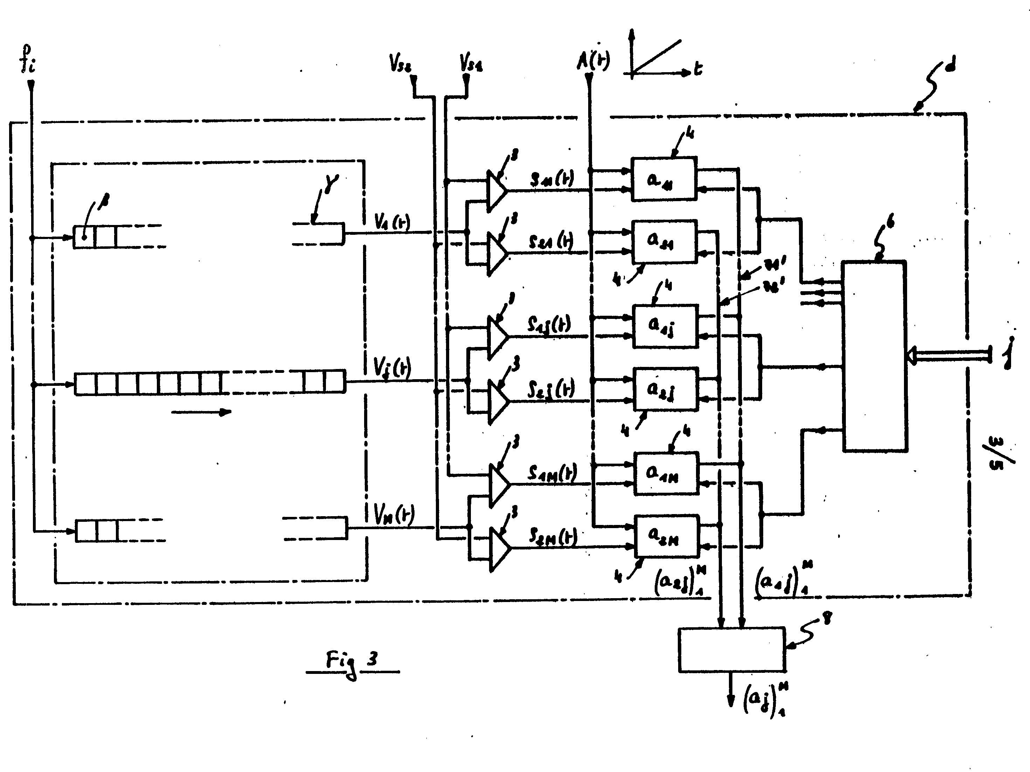

La figure 2 représente, pour le dispositif décrit, les principaux signaux électriques pendant la phase d'acquisition de l'information "profil". Le signal $V_j(t)$ délivré par la ligne j est comparé aux niveaux de référence $V_{S1}$ et $V_{S2}$. Il en résulte les signaux de dépassement de seuil $S_{1j}(t)$ et $S_{2j}(t)$ qui permettent de mémoriser les adresses $P_{1j}$ et $P_{2j}$.

L'information "profil" recherchée est contenue dans ces 2 M adresses mémorisées. Le temps d'acquisition de cette information est égal au temps d'acquisition d'une ligne, soit 25 µsec pour une ligne de 250 pixels. Le cycle complet comporte l'acquisition de l'information "profil" et la restitution des informations mémorisées.

La restitution se fait en lisant simultanément les deux groupes de mémoires (groupes des positions des fronts montants et groupe des positions des fronts descendants). En adoptant la même fréquence de lecture ($10^7$ Hz), on obtient la restitution du profil en 20 µsec pour 200 lignes. Le temps total du cycle est donc théoriquement égal à 45 µsec, soit de l'ordre de 50 µsec ou 20 000 images par seconde. Notons que la vitesse de lecture dans les cellules de mémorisation (4) de type mémoires RAM peut être bien plus élevée. Puisque $2^8 = 256$, les adresses i sont des adresses à 8 bits et les bus de sortie (71) et (72) sont 2 bus à 8 bits.

...

Le profil est numérisé sous la forme d'un mot de 16 bits.
Le dispositif travaille à 16 (bits par ligne) × 200 (lignes
par image) × 20 000 (images par seconde) = 64 Megabit par
seconde, ce qui correspond à un gain de 3 ordres de grandeur
par rapport aux dispositifs comparables connus. Il n'y a aucune
difficulté à traiter cette information en temps réel dans une
électronique discrète associée au dispositif selon l'invention.

La quantité d'information restituée par le dispositif
est très faible mais contient cependant la totalité de
l'information "profil" recherchée. Le temps de cycle est
proportionnel à la somme algébrique $P + M$ au lieu d'être
proportionnel au produit $P \times M$. On voit donc que le dispositif
selon l'invention permet de résoudre le problème du relevé
et de la mesure rapides d'un profil.

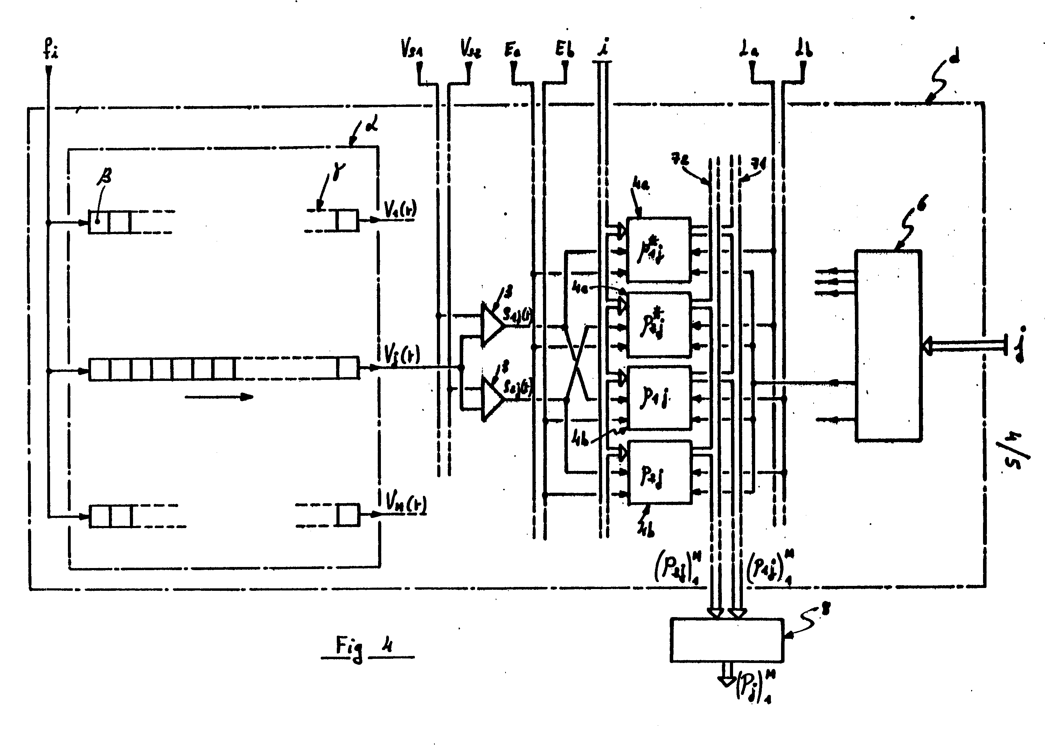

La figure 3 est un schéma synoptique d'une variante
de réalisation du dispositif selon l'invention où la mémorisation de l'information "profil" est effectuée par voie
analogique. Chaque position spatiale i d'un pixel correspond
à un niveau déterminé du signal rampe $A(t)$. Cette rampe est
appliquée à toutes les cellules de mémorisation (4),
constituées par des systèmes échantillonneurs-bloqueurs,
de manière coordonnée à la lecture en parallèle des M lignes.
Aux moments déterminés par les comparateurs (3), les valeurs
instantanées du signal $A(t)$ mémorisent la position $a_{1j}$ du
front montant et $a_{2j}$ du front descendant. La lecture des
cellules de mémorisation se fait comme précédemment, à savoir
successivement dans chaque paire de mémoires (4) pour les
adresses j variant de 1 à M. Les lignes (71') et (72')
restituent les signaux analogiques $a_1(j)$ et $a_2(j)$ qui, par
calcul, donnent le profil $a(j)$ recherché.

La figure 4 est un schéma synoptique d'une troisième
variante de réalisation du dispositif selon l'invention où,
pour diminuer le temps de cycle en conservant la même vitesse
d'acquisition d'image, on a prévu deux groupes de cellules de
mémorisation (4a) et (4b).
Le dispositif schématisé fonctionne de la manière suivante :

...

- pendant un cycle, les adresses du profil $p_{1j}$ sont identifiées comme dans le premier exemple ; elles ne peuvent être mémorisées que dans les cellules de mémorisation (4b) grâce au signal de validation d'écriture $E_b$ et à l'absence de signal de validation d'écriture $E_a$ ;

- pendant le même cycle, les adresses du profil précédent $p_{1j}^*$ et $p_{2j}^*$ (mémorisées au cycle précédent) sont lues dans les cellules de mémoires (4a) grâce au signal de validation de lecture $L_a$ et à l'absence de signal de validation de lecture $L_b$ ;

- pendant le cycle suivant, l'écriture se fait dans le groupe de mémoires (4a) et la lecture dans le groupe (4b) et ainsi de suite.

Les opérations d'écriture (acquisition et traitement du profil) et de lecture (restitution du profil) étant simultanées, le temps de cycle complet est cette fois déterminé par le plus long des deux temps d'acquisition et de restitution. En pratique, c'est toujours le temps d'acquisition. Le temps de cycle est proportionnel à P et la quantité d'information transmise atteint dans notre exemple 128 Megabits par seconde, valeur facilement exploitable.

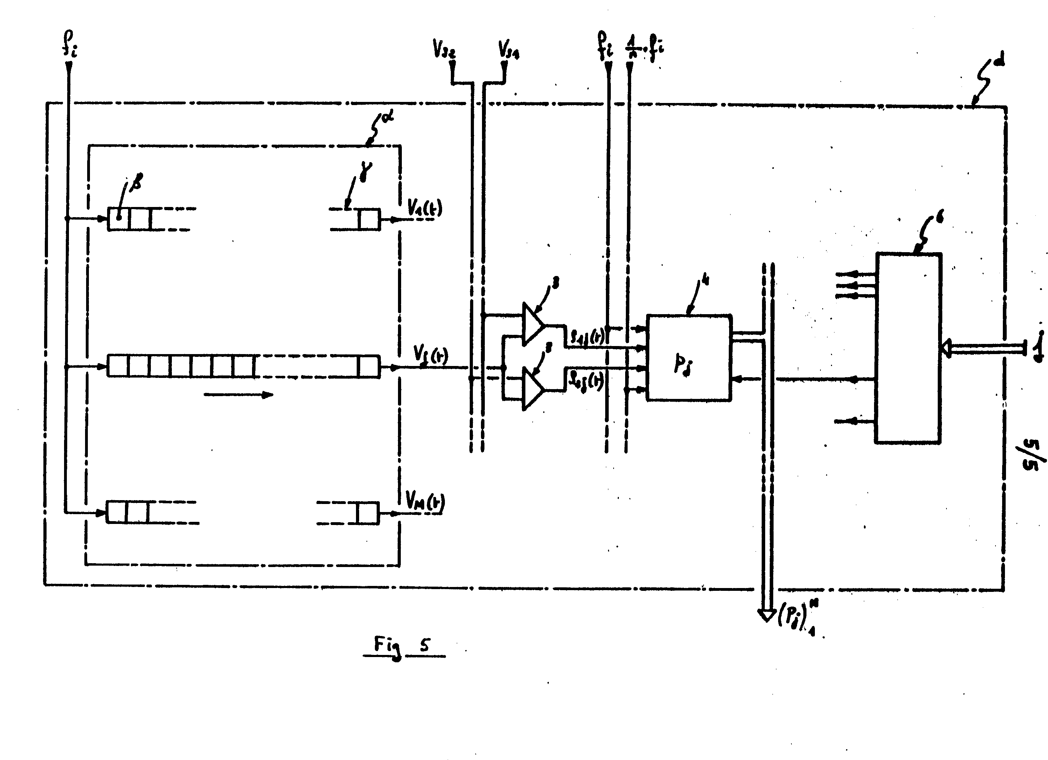

La variante de réalisation décrite à la figure 5 est un dispositif de relevé de profil (d) qui intègre le calcul du profil au dispositif. Cette variante restreint le champ des vérifications possibles sur le profil délivré , mais peut être suffisante. La cellule de mémorisation (4) comporte cette fois un compteur. Tant que $V_j(t)$ n'a pas atteint le seuil $V_{S1}$, on compte des impulsions de fréquence $f_i$. Lorsque le seuil $V_{S1}$ est dépassé et tant que $V_j(t)$ n'a pas atteint le seuil $V_{S2}$, on compte des impulsions de fréquence $\frac{1}{n} f_i$. Lorsque $V_j(t)$ a dépassé le seuil $V_{S2}$, on bloque le compteur à la valeur acquise, à savoir l'adresse du profil relevé $p_j = p_{1j} + \frac{1}{n} (p_{2j} - p_{1j})$. La fréquence des impulsions comptées peut ne pas être celle de lecture des pixels, pourvu que leur rapport soit connu. Les autres parties du dispositif sont identiques à celles du premier exemple.

...

D'autres variantes du dispositif selon l'invention peuvent être élaborées en n'utilisant qu'une seule tension de seuil pour repérer les fronts montants et les fronts descendants. Dans ce cas, le dispositif peut ne contenir qu'un seul comparateur à seuil par ligne.

Les exemples décrits se rapportent au cas où le profil apparaît en surbrillance. Il est clair que toutes les variantes du dispositif selon l'invention peuvent également repérer un profil apparaissant en silhouette. Dans ce cas, l'information "profil" est contenue dans une variation de niveau de brillance et sera donnée par une seule adresse par ligne. Un dispositif à une seule tension de seuil et un seul comparateur par ligne suffit.

L'invention s'étend à toutes les variantes du dispositif de relevé de profil décrit, notamment les dispositifs comportant plus de deux comparateurs par ligne, plus de deux cellules de mémorisation par comparateur ou plus de deux canaux de sorties, dès que des moyens particuliers sont prévus pour remplir les fonctions énoncées et aboutir au relevé et à la mesure d'un profil. Elle s'étend également aux caméras vidéo munies d'un tel dispositif de relevé de profil.

0157141

REVENDICATIONS

1. Dispositif de relevé de profil comportant une pluralité de points-image photosensibles élémentaires réalisés sur un même substrat semi-conducteur en une matrice à M lignes et P colonnes, et comportant également, associés à chacune des M lignes, des moyens appropriés de lecture et de transfert des charges électriques accumulées par lesdits points-image pour fournir un signal électrique $V_j(t)$ qui est une fonction desdites charges, lesdits moyens étant organisés en vue d'une lecture en parallèle desdites M lignes, caractérisé en ce qu'il intègre des moyens de traitement dudit signal $V_j(t)$ délivré simultanément par chacune des M lignes pour en extraire la seule information "position du profil" ainsi que des moyens de lecture desdites M informations.

2. Dispositif selon la revendication 1, caractérisé en ce que la lecture des lignes de points-image est réalisée par un registre à décalage recevant en parallèle la charge électrique contenue dans une ligne photosensible et délivrant en série un signal électrique $V_j(t)$ qui est le résultat de la conversion de la variation spatiale de brillance en variation temporelle de courant.

3. Dispositif selon l'une quelconque des revendications 1 ou 2, caractérisé en ce que le traitement du signal $V_j(t)$ délivré par une ligne est effectué par un système comprenant au moins un comparateur à seuil par ligne associé à au moins une cellule de mémorisation par comparateur, chaque comparateur repérant une variation du niveau dudit signal et au moins une desdites cellules de mémorisation enregistrant la position spatiale de ladite variation de niveau, lesdites positions spatiales constituant l'information "position du profil" attachée à une ligne.

4. Dispositif selon la revendication 3, caractérisé en ce que les moyens de lecture desdites M informations mémorisées comportent un registre d'adressage qui sélectionne une ou plusieurs cellules de mémorisation correspondant à l'adresse de ligne j demandée pour restituer l'information mémorisée via un ou plusieurs canaux de sortie.

...

5. Dispositif selon la revendication 3, caractérisé en ce qu'il comporte deux comparateurs associés à au moins une cellule de mémorisation par comparateur, le traitement du signal $V_j(t)$ délivré par une ligne étant effectué par deux comparateurs repérant, l'un un premier seuil dudit signal $V_j(t)$, l'autre un second seuil dudit signal $V_j(t)$, la position spatiale dudit premier seuil $p_{1j}$ étant enregistrée par une cellule de mémorisation, la position spatiale dudit second seuil $p_{2j}$ étant enregistrée par une cellule de mémorisation.

6. Dispositif selon la revendication 5, caractérisé en ce que les moyens de lecture desdites M informations mémorisées comportent un registre d'adressage qui sélectionne une ou plusieurs cellules de mémorisation correspondant à l'adresse de ligne j demandée pour restituer l'information mémorisée via un premier canal de sortie qui délivre les positions $p_{1j}$ du premier seuil et un second canal de sortie qui délivre les positions $p_{2j}$ du second seuil.

7. Dispositif selon l'une quelconque des revendications 4 ou 6, caractérisé en ce qu'il ne comporte qu'une cellule de mémorisation par comparateur de sorte que le cycle complet de relevé de profil comporte les deux phases successives suivantes : mémorisation desdites positions spatiales, puis lecture desdites positions spatiales mémorisées.

8. Dispositif selon l'une quelconque des revendications 4 ou 6, caractérisé en ce qu'il comporte deux cellules de mémorisation par comparateur de sorte que le cycle complet de relevé comporte les phases simultanées de mémorisation desdites positions spatiales et de lecture des positions spatiales mémorisées pendant le cycle précédent.

9. Dispositif selon l'une quelconque des revendications 1 ou 2, caractérisé en ce qu'il intègre des moyens de calcul du profil àpartir des informations "position du profil" extraites.

10. Dispositif selon la revendication 9, caractérisé en ce que le traitement du signal $V_j(t)$ délivré par une ligne est effectué par un système comprenant deux comparateurs à seuil et une cellule de mémorisation comportant un compteur, le premier comparateur repérant un premier seuil du signal $V_j(t)$, l'autre

...

0157141

repérant un second seuil, le compteur fonctionnant selon un premier mode jusqu'à ce que le premier comparateur atteigne le premier seuil, selon un autre mode jusqu'à ce que le second comparateur atteigne le second seuil, et conservant la valeur acquise ensuite, ladite valeur étant l'information "position du profil" calculée.

11. Dispositif selon la revendication 10 caractérisé en ce que les moyens de lecture desdites informations "profil" mémorisées par les compteurs comportent un registre d'adressage qui sélectionne la cellule de mémorisation correspondant à l'adresse j de la ligne demandée.

12. Dispositif selon l'une des revendications 4, 6, 7, 8 ou 11, caractérisé en ce que la sélection des adresses j est séquentielle.

13. Caméra vidéo comportant un dispositif selon l'une quelconque des revendications 1 à 12.

Fig. 1

0157141

2/5

Fig. 2

Fig 3

Fig. 4

0157141

Fig 5

Office européen
des brevets

**RAPPORT DE RECHERCHE EUROPEENNE**

0157141

Numéro de la demande

EP 85 10 1761

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| Y,D | US-A-4 322 752 (BIXBY)<br>* Colonne 2, lignes 34-58 *<br><br>--- | 1,3,13 | H 04 N 5/335<br>G 01 B 11/02 |
| Y | MESSEN + PRÜFEN/AUTOMATIK, no. 9, septembre 1980, pages 549-554, Bad Wörishofen, DE; H. MURPHY et al.: "Schnelles Sortieren mittels Bildsensoren in CCD-Technologie"<br>* Pages 550-551, paragraphe 3.1 *<br><br>----- | 1,3,13 | |

| DOMAINES TECHNIQUES RECHERCHES (Int. Cl.4) |
|---|
| H 04 N<br>G 01 B 11/02 |

Le présent rapport de recherche a été établi pour toutes les revendications

| Lieu de la recherche | Date d'achèvement de la recherche | Examinateur |
|---|---|---|
| LA HAYE | 07-06-1985 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82